# EUROPEAN PATENT SPECIFICATION

(11) **EP 3 122 028 B1**
(45) Date of publication and mention of the grant of the patent: **14.10.2020**
(21) Application number: 15178015.2
(22) Date of filing: 23.07.2015
(51) Int. Cl.: H04N 1/00, H04N 19/127

(54) **IMAGE PROCESSING APPARATUS AND PROCESSING METHOD**
BILDVERARBEITUNGSVORRICHTUNG UND BILDVERARBEITUNGSVERFAHREN
APPAREIL ET PROCÉDÉ DE TRAITEMENT DES IMAGES

(43) Date of publication of application: 25.01.2017
(73) Proprietor: Kabushiki Kaisha Toshiba, Tokyo 105-8001 (JP); Toshiba TEC Kabushiki Kaisha, Tokyo 141-0032 (JP)
(72) Inventor: YOSHIDA, Ryo, Shinagawa-ku, Tokyo 141-0032 (JP)
(74) Representative: Bandpay & Greuter

(56) References cited:
- US-A1- 2012 222 036
- Hiroyuki Hayashi ET AL: "A4 Monochrome LED Printer & MFP developed with Common Platform -B400/B500 series & MB400/MB500 series", Issue, 31 May 2015 (2015-05-31), XP55242053, Retrieved from the Internet: URL:https://www.oki.com/en/otr/2015/n225/p df/otr-225-R21.pdf [retrieved on 2016-01-15]

## Description

### FIELD

Embodiments described herein relate generally to an image processing apparatus and a processing method.

### BACKGROUND

In an image processing apparatus such as a digital multi-function peripheral, a common substrate is often adopted for different models to reduce manufacturing cost. As a result, it may be arranged not to use a part of the hardware of the substrate in a low-end model or in a machine installed with no option device. In those cases, the hardware cannot be put to practical use sufficiently. Prior art is known from Hiroyuki Hayashi ET AL: "A4 Monochrome LED Printer & MFP developed with Common Platform -B400/B500 series & MB400/ MB500 series", and US 2012/222036.

### BRIEF DESCRIPTION OF THE DRAWINGS

Fig. 1 is an external view illustrating an example of an image processing apparatus 1 according to an embodiment;
Fig. 2 is a block diagram illustrating the hardware constitution of the image processing apparatus 1;
Fig. 3 is a functional block diagram illustrating functional components of the image processing apparatus 1;
Fig. 4 is a functional block diagram of a system control section 20;
Fig. 5 is a diagram illustrating an example of a hardware use condition definition table;
Fig. 6 is a first diagram illustrating an example of constitution information;
Fig. 7 is a second diagram illustrating an example of constitution information;
Fig. 8 is a third diagram illustrating an example of constitution information;
Fig. 9 is a diagram illustrating an example of a rotation parallel processing using multiple pieces of hardware;
Fig. 10 is a flowchart illustrating a processing when the power supply is started in the image processing apparatus 1;
Fig. 11 is a flowchart illustrating an image processing in the image processing apparatus 1; and
Fig. 12 is a flowchart illustrating a hardware assignment processing in the image processing apparatus 1.

### DETAILED DESCRIPTION

In accordance with an embodiment, an image processing apparatus comprises a constitution information acquisition section and an assignment section. The constitution information acquisition section acquires constitution information of the self-device. The assignment section acquires a category of an image processing executed by the self-device, and assigns the image processing to a piece of hardware, which is determined based on the category of the image processing, a hardware use condition definition table in which conditions for using a piece of hardware installed in a system controller of the self-device are set, and the constitution information acquired by the constitution information acquisition section, to execute it.

The image processing apparatus may further comprise:
a use condition generation section configured to acquire information of a piece of hardware installed in the system controller to generate a hardware use condition definition table in which a condition for using the acquired hardware is set.

The image processing apparatus may further comprise:
an operation section configured to receive an input of operation mode in an execution of the image processing, wherein the assignment section determines a piece of hardware to which the image processing is assigned according to the operation mode received by the operation section.

The image processing apparatus may further comprise: a power supply control section configured to turn off a power supply of a piece of hardware of which power supply ON/OFF can be switched in a case in which the assignment section determines to assign the image processing, and to turn on the power supply of the piece of the hardware in the cases other than the case.

In a case in which there exists other piece of hardware that can execute an image processing in addition to the piece of hardware that is determined to execute the image processing and when the image processing can be divided, the assignment section may divide image data relating to the image processing, and assign each of the divided image data to the determined hardware and the other hardware to execute the image processing.

A dedicated circuit for image processing and a general processor may be contained in the hardware. The assignment section may assign the image processing to the general processor.

The assignment section may determine a piece of hardware assigned according to the priority degree of each image processing in a case of executing a plurality of image processing.

In a case in which a first image processing is assigned to a first hardware having high performance, and a second image processing higher in priority degree than the first image processing is executed, the assignment section may assign the second image processing to the first hardware to execute it at a switchable timing.

The assignment section may determine a processing load based on a given condition, and may assign each of the divided image data to the determined hardware and the other hardware to execute the image processing in a case in which it is determined to be a heavy load.

The present invention further relates to an image processing method, including: acquiring constitution information of the self-device; acquiring a category of an image processing executed by the self-device, and assigning the image processing to a piece of hardware, which is determined based on the category of the image processing, a hardware use condition definition table in which conditions for using a piece of hardware installed in a system controller of the self-device are set, and the acquired constitution information, to execute it.

The method may further comprise acquiring information of a piece of hardware installed in the system controller to generate a hardware use condition definition table in which a condition for using the acquired hardware is set.

The method may further comprise receiving an input of operation mode in an execution of the image processing, in which a piece of hardware to which the image processing is assigned is determined according to the operation mode received at the receiving step.

The method may further comprise turning off a power supply of a piece of hardware of which power supply ON/OFF can be switched in a case in which assigning the image processing is determined, and to turning on the power supply of the piece of the hardware in the cases other than the case.

In a case in which there exists other piece of hardware that can execute an image processing in addition to the piece of hardware that is determined to execute the image processing and when the image processing can be divided, image data relating to the image processing imay be divided, and each of the divided image data may be assigned to the determined hardware and the other hardware to execute the image processing.

The method may further comprise determining a piece of hardware assigned according to the priority degree of each image processing in a case of executing a plurality of image processing.

In a case in which a first image processing is assigned to a first hardware having high performance, and a second image processing higher in priority degree than the first image processing is executed, the second image processing may be assigned to the first hardware to execute it at a switchable timing.

The method may further comprise determining a processing load based on a given condition, and assigning each of the divided image data to the determined hardware and the other hardware to execute the image processing in a case in which it is determined to be a heavy load.

Hereinafter, an image processing apparatus according to the embodiment is described with reference to the accompanying drawings.

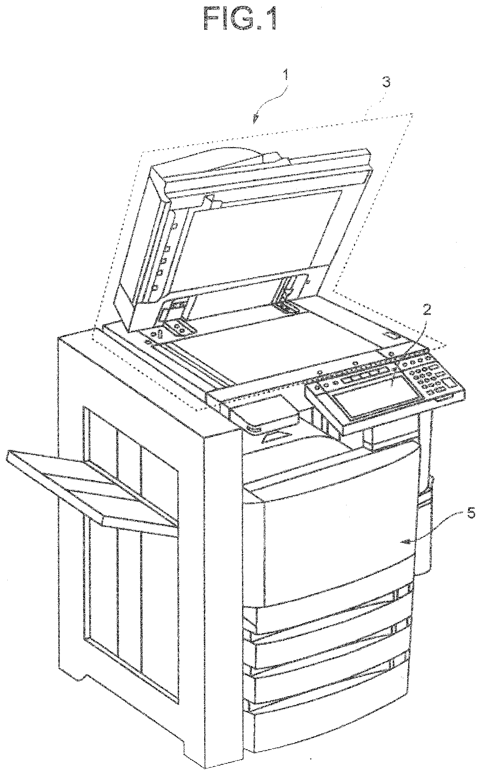

Fig. 1 is an external view illustrating an example of an image processing apparatus 1 according to the embodiment.

The image forming apparatus 1 is, for example, an MFP (Multi-functional Peripheral). The image processing apparatus 1 reads an image that appears on a sheet to generate digital data, and then generates an image file. For example, the sheet is an original, a paper on which characters, an image and the like are recorded and the like, and no limitation is given to the sheet as long as it can be read by the image processing apparatus 1. In the example shown in Fig. 1, the image processing apparatus 1 comprises an operation section 2, a scanner section 3, and a print section 5. Further, the print section 5 of the image processing apparatus 1 may be a device fixing a toner image, or an inkjet type device.

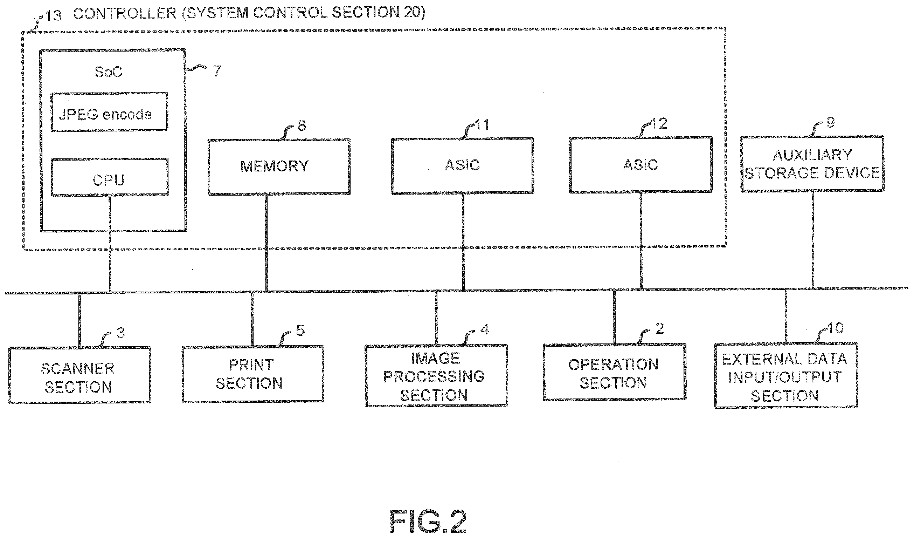

Fig. 2 is a block diagram illustrating the hardware constitution of the image processing apparatus 1.

The image processing apparatus 1, which is provided with an SoC (System on Chip) 7, a memory 8, an auxiliary storage device 9 and the like which are connected with each other via a bus, executes an image processing program. Herein, the SoC in which its peripheral functions are embedded in a CPU (Central Processing Unit) carries a JPEG functional circuit described later. Further, an image processing program is pre-stored in the auxiliary storage device 9, and is read by the CPU (hereinafter recorded as the SoC including the CPU of SoC) of the SoC 7 in the memory 8. By executing the image processing program by the SoC 7, the image processing apparatus 1 functions as an apparatus comprising the operation section 2, the scanner section 3, an image processing section 4, the print section 5 and an external data input/output section 10. The SoC 7 enables an ASIC (1) (hereinafter referred to as an ASIC 11) and an ASIC (2) (hereinafter referred to as an ASIC 12) to carry out an image processing. Each of the ASIC 11 and the ASIC 12 is provided with a dedicated circuit for image processing. The ASIC 11 and the ASIC 12 execute all or part of the image processing. The SoC 7, the memory 8, the ASIC 11 and the ASIC 12 function as a system control section 20 which controls function sections of the image processing apparatus 1. The ASIC is the abbreviation of Application Specific Integrated Circuit. Further, a piece of hardware (that is, the SoC 7, the memory 8, the ASIC 11 and the ASIC 12) constituting the system control section 20 is called as the system controller 13. Moreover, it is assumed that the piece of the hardware hereinafter refers to the SoC 7, the memory 8, the ASIC 11 and the ASIC 12 equipped in the system controller 13. In addition, it is assumed that the processing refers to an image processing hereinafter.

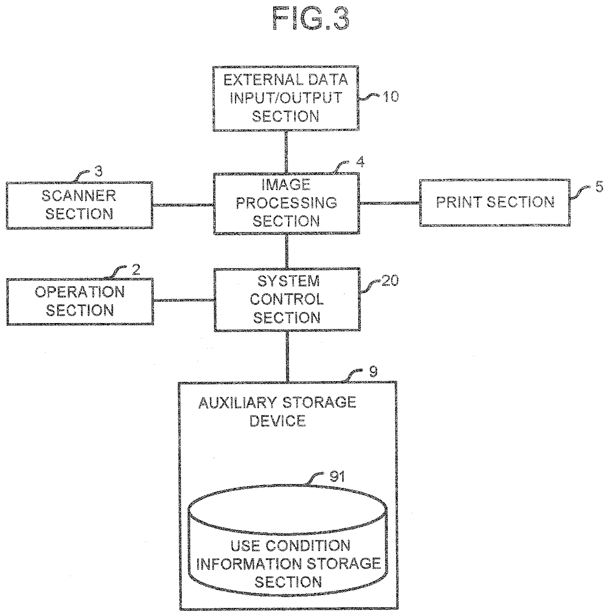

Fig. 3 is a functional block diagram illustrating functional components of the image forming apparatus 1.

The operation section 2 receives an input of operation of a user on the image processing apparatus 1. Specifically, the operation section 2 is constituted by a display device and an input device. For example, the display device is a liquid crystal display, an organic EL (Electroluminescence) display and the like. Further, for example, the input device is a keyboard, a touch panel and the like. The operation section 2 outputs information input through the input device to the system control section 20. The input information contains information relating to a processing to be executed by the image processing apparatus 1. For example, the input information contains information indicating a processing category such as whether to carry out a scan job or to carry out a copy job. For example, the input information contains operation mode information indicating either a performance priority mode or a power saving mode. For example, the input information contains setting information indicating either a duplex scan or a simplex scan, a scan resolution, a direction of a scan image and the like. The information relating to the processing executed by the image processing apparatus 1 through these inputs of the user is referred to as instruction information.

The scanner section 3 reads an image on a sheet through an image sensor such as a CCD, a CIS and the like to generate image data. The CCD is the abbreviation of Charge Coupled Device. The CIS is the abbreviation of Contact Image Sensor. The scanner section 3 outputs the generated image data to the image processing section 4.

The image processing section 4 carries out an image processing on the image data output from the scanner section 3 or image data input from an external device or a recording medium. The image processing section 4 outputs the image data subjected to the image processing described above to the print section 5.

The print section 5 prints the image data output from the image processing section 4 on a sheet for printing.

The auxiliary storage device 9 comprises a use condition information storage section 91. The use condition information storage section 91 stores use condition information. The use condition information refers to information in which use conditions for using the hardware by each processing of the image processing carried out by the image processing apparatus 1 are specified. Further, the auxiliary storage device 9 may be used as an area in which the image data acquired or generated by the scanner section 3, the image processing section 4 and the external data input/output section 10 is stored.

The external data input/output section 10 carries out an input/output of image data. For example, the external data input/output section 10 may be constituted by a communication interface such as an LAN (Local Area Network) and the like. In this case, the external data input/output section 10 acquires image data from an external device through a network. The external data input/output section 10 may provide the image data generated by the self-device to the external device. The external data input/output section 10 acquires the instruction information. For example, the external data input/output section 10 acquires instruction information for instructing to print the image data and the image data from the external device. The external data input/output section 10 outputs the acquired instruction information to the system control section 20.

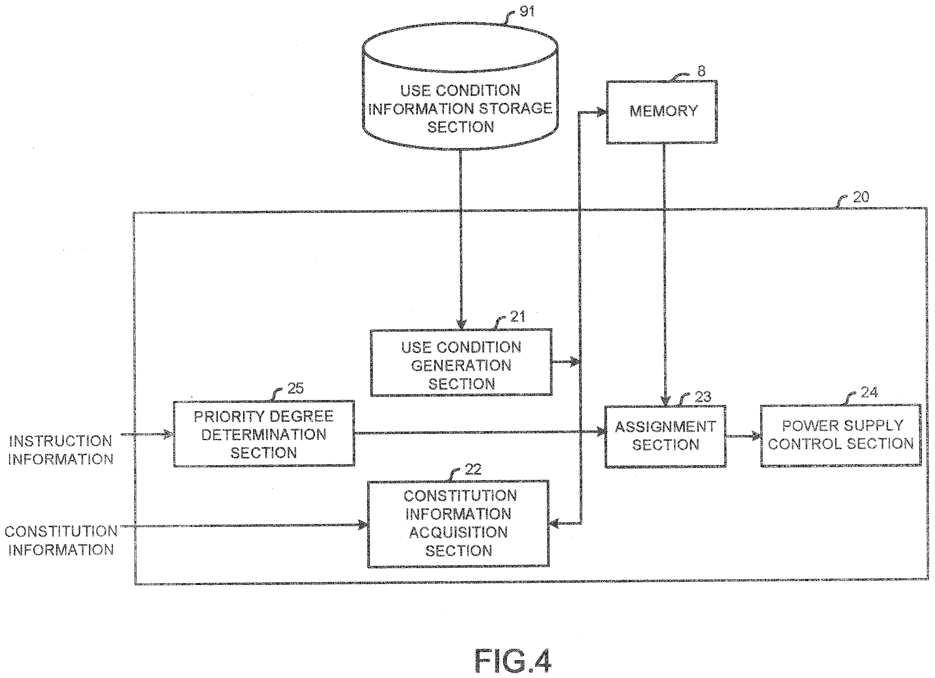

Fig. 4 is a functional block diagram of the system control section 20.

The system control section 20 comprises a use condition generation section 21, a constitution information acquisition section 22, an assignment section 23, a power supply control section 24 and a priority degree determination section 25.

The use condition generation section 21 generates a hardware use condition definition table. Specifically, the use condition generation section 21 acquires information of the hardware installed in the system controller 13. For example, the information of hardware refers to information of a category of the hardware and information such as a processing performance of each piece of hardware. The use condition generation section 21 reads out the use condition information from the use condition information storage section 91. The use condition generation section 21 generates the hardware use condition definition table through the combination of the information of hardware with the use condition information. The use condition generation section 21 writes the hardware use condition definition table in the memory 8.

The constitution information acquisition section 22 acquires constitution information of machines constituting the image processing apparatus 1. The machines constituting the image processing apparatus 1 refer to the scanner section 3 and the print section 5 of the image processing apparatus 1. For example, the constitution information includes information indicating the functions and performances of the scanner section 3 and the print section 5. Further, the constitution information includes information indicating functions and performances of a device (such as an ADF device) added to the image processing apparatus 1. Further, the ADF is the abbreviation of Auto Document Feeder. The constitution information acquisition section 22 writes the acquired machine constitution condition in the memory 8.

The assignment section 23 acquires, for example, information indicating the processing category contained in the instruction information to determine a piece of hardware which executes the processing. Specifically, the assignment section 23 determines the piece of hardware based on the hardware use condition definition table and the constitution information of the image processing apparatus 1. The assignment section 23 assigns the image processing to the determined hardware and enables the determined hardware to execute the image processing.

The power supply control section 24 carries out a control of power supply on a piece of hardware of which the ON/OFF of the power supply can be switched among the pieces of hardware installed in the system controller 13. Specifically, the power supply control section 24 turns off the power supply of a piece of hardware not required to operate of which the power supply OFF is available. The power supply control section 24 turns off the power supply of the hardware only in a case in which the assignment section 23 assigns a processing to the hardware.

The priority degree determination section 25 acquires the instruction information and determines a priority degree according to which a processing is carried out on the processing corresponding to the instruction information.

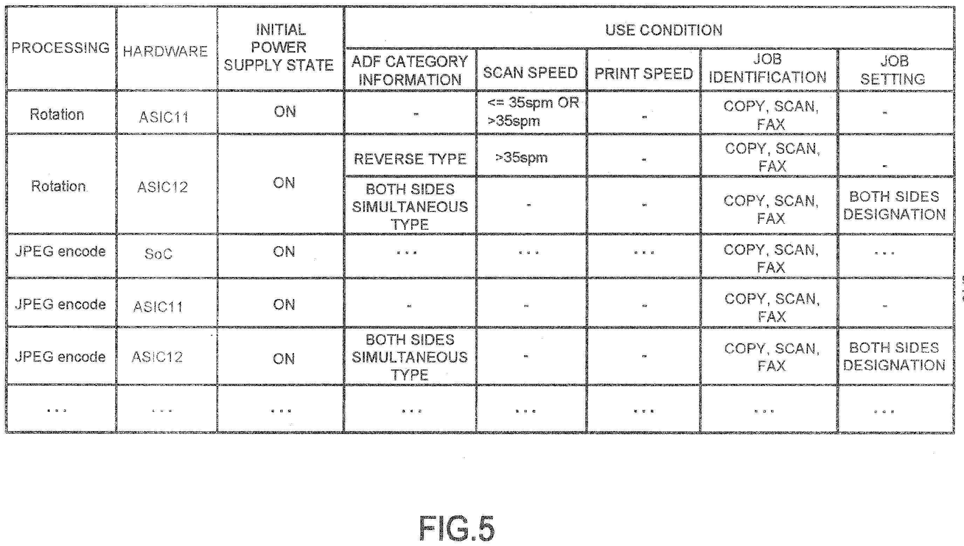

Fig. 5 is a diagram illustrating an example of the hardware use condition definition table.

The table as shown in Fig. 5 is generated by the use condition generation section 21 through the combination of the information of the hardware installed in the system controller 13 and the use condition information.

The use condition information stored by the use condition information storage section 91 includes information indicated by a "processing" and "use condition" of the table in Fig. 5. The use condition information refers to information representing a condition for determining to use which piece of hardware to execute a processing to be executed by the image processing apparatus 1. The condition refers to information indicated in the "use condition" of the table in Fig. 5.

The use condition generation section 21 acquires, when the image processing apparatus 1 is started, information such as a category of the hardware installed in the system controller 13, a processing performance of each piece of hardware and the like. The use condition generation section 21 reads out the use condition information from the use condition information storage section 91. The use condition generation section 21 associates the use condition information with each piece of hardware according to the acquired processing performance of the hardware.

In the present embodiment, it is assumed that the processing speed of the ASIC 12 is faster than that of the ASIC 11. It is assumed that each of the processing speeds of the ASIC 11 and the ASIC 12 is faster than that of the SoC 7. The "-" in Fig. 5 means that it applies to all conditions. The use condition generation section 21 associates a processing in a case in which the scan speed may be a relatively low speed for the processing "Rotation" with the ASIC 11. Further, the use condition generation section 21 associates a processing in a case in which a relatively high scan speed is required for the processing "Rotation" with the ASIC 12. Further, the processing "Rotation" is executed by the image processing apparatus 1 in a case in which the user inputs instruction information for rotating the direction of the scan image through the operation section 2. The use condition generation section 21 also associates the use condition information with the hardware for the processing "JPEG encode" according to the processing performance of hardware. Further, the processing "JPEG encode" is executed to generate an image file by the image processing apparatus 1 in a case in which an instruction information including the processing category "scan" is input.

Next, the use condition generation section 21 determines whether to set the power supply to ON or to set the power supply of each piece of hardware to OFF in the initial state. In the present embodiment, it is assumed that the power consumption of the ASIC 11 is less than that of the ASIC 12. It is required that the power supply of the SoC 7 is ON during a period the image processing apparatus 1 has been started. The use condition generation section 21 determines that the power supply of the SoC 7 is set to ON in the initial state. The use condition generation section 21 determines to set the power supply of the ASIC 11 of which the power consumption is less to ON in the initial state. The use condition generation section 21 determines to set the power supply of the ASIC 12 to OFF in the initial state. The use condition generation section 21 associates the information indicating the initial state of the determined power supply with each piece of hardware. In this way, the use condition generation section 21 generates the hardware use condition definition table in which the use condition information and the initial state of the power supply are associated in each piece of hardware, and then writes it in the memory 8.

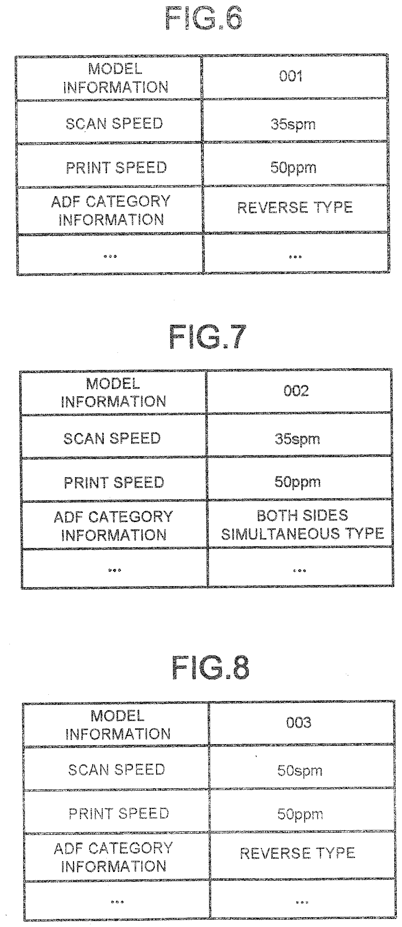

Fig. 6 is a first diagram illustrating an example of the constitution information.

As shown in Fig. 6, the constitution information includes model information of the image processing apparatus 1. The model information refers to information indicating a model of the image processing apparatus 1 set for each combination of, for example, the system controller 13, the scanner section 3 with the print section 5. For example, the constitution information includes information indicating a scan speed, information indicating a print speed, and ADF installation information. The scanner section 3 and the print section 5 have constitution information indicating the functions and performances of the self-devices. The constitution information acquisition section 22 acquires the information indicating the scan speed from the scanner section 3 and ADF category information when the image processing apparatus 1 is started. The constitution information acquisition section 22 acquires the information indicating the print speed from the print section 5 when the image processing apparatus 1 is started. The constitution information acquisition section 22 writes the acquired constitution information in the memory 8. Further, a "reverse type" of the ADF category information shown in Fig. 6 refers to a scan method of reading single side of a sheet. The user inputs instruction information of a duplex scan of a sheet through the operation section 2. Then, the scanner section 3 provided with the reverse type ADF scans one side of the sheet first, and then reverses the sheet to scan the other side of the sheet.

The assignment section 23 determines a piece of hardware which executes the processing based on the hardware use condition definition table, the constitution information and the instruction information. For example, the user inputs instruction information including a processing category "scan" and a setting information "rotation" to the image processing apparatus 1 having the constitution information shown in Fig. 6 through the operation section 2. The assignment section 23 reads out a scan speed "35spm" and an ADF category information "reverse type" from the constitution information of the memory 8. The assignment section 23 refers to the use condition information relating to the processing "JPEG encode" from the table shown in Fig. 5 for the processing category "scan" . The assignment section 23 reads out hardware information (ASIC 11) associated with a use condition meeting the condition of the ADF category information from the memory 8 for the processing category "scan" . The assignment section 23 refers to the use condition information relating to the processing "Rotation" from the table shown in Fig. 5 for the setting information "rotation" . The assignment section 23 reads out hardware information (ASIC 11) associated with a use condition meeting the condition of the scan speed from the memory 8. The ASIC 11 is a piece of hardware meeting the condition executing the instruction information. The assignment section 23 assigns the processing relating to the processing category "scan" and the setting information "rotation" to the ASIC 11 to execute them.

On the other hand, the initial value of the power supply state of the ASIC 12 is OFF, and the assignment section 23 assigns the processing instructed by the user to the ASIC 11. Thus, there is no need for the power supply control section 24 to turn on the power supply of the ASIC 12. In accordance with the present embodiment, the power supply of the hardware (ASIC 12) not required to operate can be turned off, thus obtaining a power saving effect.

Fig. 7 is a second diagram illustrating an example of the constitution information.

Fig. 7 is the constitution information of the image processing apparatus 1 of which the model information is 002. The constitution information acquisition section 22 acquires the constitution information of the image processing apparatus 1 of which the model information is 002, and writes it in the memory 8. The ADF category information of the constitution information shown in Fig. 7 is "both sides simultaneous type". The "both sides simultaneous type" refers to a scan method of reading the both sides of the sheet simultaneously.

For example, the user inputs instruction information including a processing category "scan" and setting information "rotation" and "both sides designation" to the image processing apparatus 1 having the constitution information shown in Fig. 7 through the operation section 2. Then the assignment section 23 reads out a scan speed "35spm" and an ADF category information "both sides simultaneous type" from the constitution information of the memory 8. The assignment section 23 refers to the use condition information relating to the processing "JPEG encode" from the table shown in Fig. 5 for the processing category "scan" . The assignment section 23 specifies hardware information (ASIC 11 and ASIC 12) associated with a use condition meeting the ADF category information "both sides simultaneous type" and the setting information "both sides designation" . The assignment section 23 refers to the use condition information relating to the processing "Rotation" from the table shown in Fig. 5 based on the processing category "rotation" . The assignment section 23 specifies hardware information (ASIC 11, ASIC 12) meeting the condition of the scan speed, the ADF category information and the setting information for the processing "Rotation" . The assignment section 23 determines the hardware to which the processing is assigned to be the ASIC 11 and the ASIC 12. The assignment section 23 gives an instruction on the power supply control section 24 to turn on the power supply of the ASIC 12. The power supply control section 24 turns on the power supply of the ASIC 12. The assignment section 23 assigns the processing relating to the processing category "scan" and the setting information "rotation" and "both sides designation" to the ASIC 11 and the ASIC 12 to execute them. In accordance with the present embodiment, the ASIC 12 of which the power supply is OFF in the initial state is turned on as needed, and thus can be put to practice use.

Further, for example, the user inputs instruction information including a processing category "scan" and setting information "rotation" without the setting information "both sides designation" through the operation section 2 . The assignment section 23 determines a piece of hardware (ASIC 11) meeting these conditions based on the constitution information of the memory 8 and the hardware use condition definition table. The assignment section 23 assigns the processing relating to the processing category "scan" and the setting information "rotation" to the ASIC 11 to execute them. In this case, the power supply control section 24 doesn' t turn on the power supply of the ASIC 12, and thus it is possible to save power.

In accordance with the present embodiment, the power supply of the ASIC 12 of which the power supply is OFF in the initial state is turned on and a processing is assigned according to the machine constitution, the processing category and the setting information. In this way, the ASIC 11 and the ASIC 12 are operated in parallel, and thus the scan performance can be guaranteed.

Fig. 8 is a third diagram illustrating an example of the constitution information.

Fig. 8 is the constitution information of the image processing apparatus 1 of which the model information is 003. The constitution information acquisition section 22 acquires the constitution information of the image processing apparatus 1 of which the model information is 003, and writes it in the memory 8. The scan speed of the constitution information shown in Fig. 8 is 50spm.

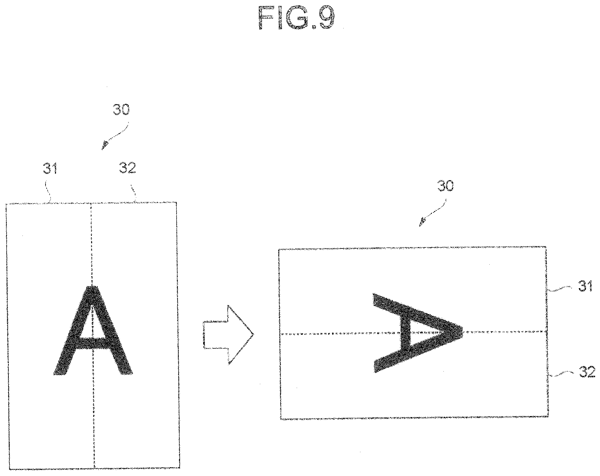

For example, the user inputs instruction information including a processing category "scan" and a setting information "rotation" to the image processing apparatus 1 having the constitution information shown in Fig. 8 through the operation section 2. Then the assignment section 23 reads out a scan speed "50spm" and an ADF category information "reverse type" from the constitution information of the memory 8. The assignment section 23 refers to the use condition information relating to the processing "JPEG encode" from the table shown in Fig. 5 for the processing category "scan" . The assignment section 23 reads out hardware information (ASIC 11) meeting a condition of the ADF category information "simplex type" from the memory 8. The assignment section 23 refers to the use condition information relating to the processing "Rotation" from the table shown in Fig. 5 for the setting information "rotation" . The assignment section 23 reads out hardware information (ASIC 11, ASIC 12) meeting a condition of the scan speed and the ADF category information from the memory 8. The assignment section 23 assigns the processing relating to the processing category "scan" and the setting information "rotation" to the ASIC 11 and the ASIC 12 to execute them. Next, an example of an assignment method of hardware at the time of high-speed reading is described with reference to Fig. 9.

Fig. 9 is diagram illustrating an example of a rotation parallel processing using multiple pieces of hardware.

The figure at the left side of Fig. 9 illustrates a sheet subjected to a scan processing. "A" is vertically printed on the sheet. Herein, the user inputs the instruction information including the processing category "scan" and the setting information "rotation" in the image processing apparatus 1 through the operation section 2. Then, the assignment section 23 assigns the processing to the ASIC 11 and the ASIC 12 to execute it as described in Fig. 8. Specifically, the assignment section 23 assigns a processing of an image 31 of the left half of an image 30 serving as a processing target to, for example, the ASIC 11. The power supply control section 24 sets the power supply of the ASIC 12 of which the power supply is OFF in the initial state to ON. The assignment section 23 assigns a processing of an image 32 of the right half of the image 30 to, for example, the ASIC 12.

The figure at the right side of Fig. 9 illustrates the image 30 that is subjected to a rotation processing through the ASIC 11 and the ASIC 12. The ASIC 11 carries out a rotation processing of the image 31. The ASIC 12 carries out a rotation processing of the image 32. The SoC 7 integrates the images 31 and 32 that are subjected to the rotation processing to generate the image 30 shown in the figure at the right side. In a case of an image rotation processing, it is possible to divide the image 30 serving as the processing target to carry out processing in parallel.

In accordance with the present embodiment, in a case of carrying out a dividable processing and if there is a residual hardware, it is possible to assign the processing to the residual hardware dynamically. When compared to a case in which it is arranged such that only parts of the hardware is used in advance, as the residual hardware can be used, the hardware can be put into practice use fully. Further, by carrying out a parallel processing using the multiple pieces of hardware, the processing performance can be improved.

Further, in addition to the image rotation processing, the dividable processing includes an image reduction processing, an image enlarging processing, a color conversion processing between RGB and CMYK, and the like.

Further, in a case of carrying out a division processing, it is possible to consider the following situation. The assignment section 23 determines whether it is a dividable processing, and a processing load based on a given condition. If it is determined to be a heavy load, the assignment section 23 assigns the divided processing to multiple pieces of hardware respectively to execute it as described in Fig. 9. For example, the determination on the load is carried out in a case of scanning an original larger than A4 size, the assignment section 23 may determine it as a heavy load. Further, in a case of scanning at a resolution higher than 300dpi, the assignment section 23 may determine it as a heavy load.

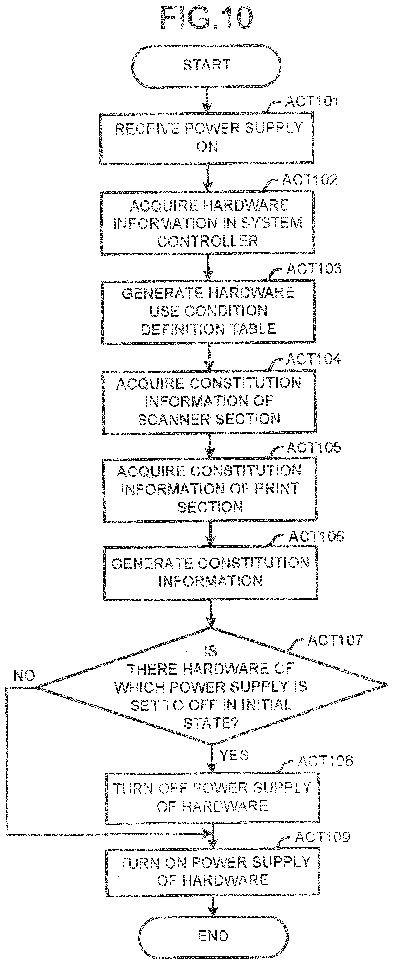

Fig. 10 is a flowchart illustrating a processing when the power supply is started in the image processing apparatus 1.

First, the operation section 2 receives an input of power supply ON to the image processing apparatus 1 (ACT 101). The operation section 2 outputs information indicating that the input of the power supply ON is received to the system control section 20. The system control section 20 starts the activation of the image processing apparatus 1. The use condition generation section 21 carries out communication with the hardware (the SoC 7, the memory 8, the ASIC 11 and the ASIC 12) in the system controller 13 to acquire hardware information (ACT 102). For example, the hardware information refers to information relating to a processing performance such as a clock speed if the hardware is the SoC 7, the ASIC 11 and the ASIC 12. The use condition generation section 21 reads out use condition information from the use condition information storage section 91 of the auxiliary storage device 9. The use condition generation section 21 carries out an association of the use condition information with the hardware. Further, the use condition generation section 21 determines an initial state of the power supply. The use condition generation section 21 adds the information of the initial state of the power supply to the information subjected to the association to generate a hardware use condition definition table (ACT 103). The associating method and the determination method of the initial state of the power supply are described with reference to Fig. 5. The use condition generation section 21 writes the hardware use condition definition table into the memory 8. The constitution information acquisition section 22 acquires the constitution information of the scanner section 3 from the scanner section 3 via an interface with the scanner section 3 (ACT 104). For example, the constitution information of the scanner section 3 refers to the scan speed information and the ADF category information. The constitution information acquisition section 22 acquires the constitution information of the print section 5 from the print section 5 via an interface with the print section 5 (ACT 105). For example, the constitution information of the print section 5 refers to the print speed information. The constitution information acquisition section 22 acquires the model information of the image processing apparatus 1 from the use condition information storage section 91. The constitution information acquisition section 22 generates constitution information using the model information, the constitution information of the scanner section 3 and the constitution information of the print section 5, and then writes it into the memory 8 (ACT 106). The assignment section 23 determines whether or not there is a piece of hardware of which the power supply is set to OFF in the initial state (ACT 107). The assignment section 23 determines that there is a piece of hardware of which the power supply is set to OFF in the initial state if there is a piece of hardware of which the value of the "initial power supply state" is OFF in the hardware use condition definition table. In a case in which it is determined that there is a piece of hardware of which the power supply is set to OFF in the initial state (YES in ACT 107), the assignment section 23 outputs identification information of the piece of hardware to the power supply control section 24. The power supply control section 24 turns off the power supply of the hardware corresponding to the acquired identification information (ACT 108). In a case in which it is determined that there is no hardware of which the power supply is set to OFF in the initial state (NO in ACT 107), the power supply control section 24 doesn' t turn off the power supply of the hardware in the system controller 13.

The power supply control section 24 turns on the power supply of the hardware that is not to be a target of which the power supply is to be turned off in ACT 107 (ACT 109).

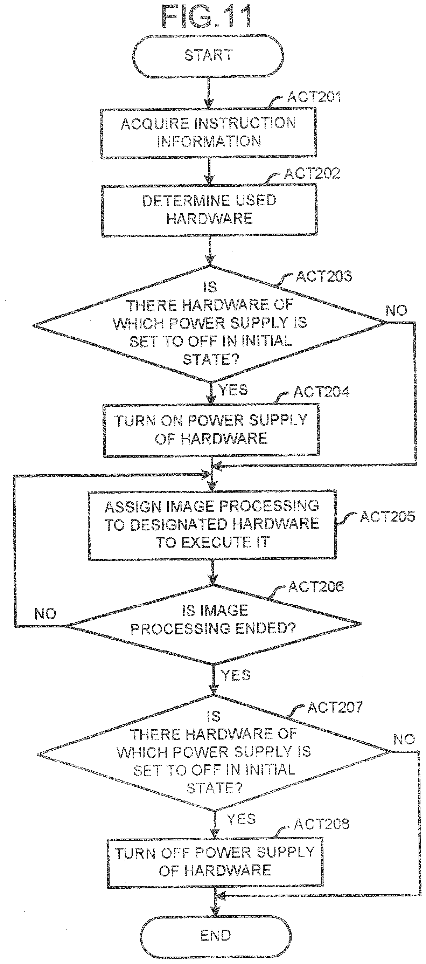

Fig. 11 is a flowchart illustrating an image processing in the image processing apparatus 1.

First, the operation section 2 receives an input of instruction information required in the execution of an image processing to the image processing apparatus 1 (ACT 201). The instruction information is the processing category such as "scan", "print" and the like, the setting information on whether to carry out "rotation" of scan image, and whether to carry out "both sides designation", and the like. The operation section 2 outputs the instruction information to the system control section 20. In the system control section 20, the assignment section 23 determines a used hardware according to the instruction information, the constitution information and the hardware use condition definition table (ACT 202). As described in Fig. 6-Fig. 8, the assignment section 23 retrieves a piece of hardware meeting a condition indicated by the instruction information and the constitution information from the hardware use condition definition table. The assignment section 23 determines the retrieved hardware to be a used hardware. The assignment section 23 determines whether or not there is a piece of hardware of which the power supply is set to OFF in the initial state among the used hardware (ACT 203). The assignment section 23 refers to values of the "initial power supply state" in the hardware use condition definition table for all the used hardware. The assignment section 23 determines that there is no hardware of which the power supply is set to OFF in the initial state if the values of the "initial power supply state" of all the used hardware are ON. Otherwise, the assignment section 23 determines that there is a piece of hardware of which the power supply is set to OFF in the initial state. In a case in which it is determined that there is a piece of hardware of which the power supply is set to OFF in the initial state (YES in ACT 203), the assignment section 23 outputs identification information of the hardware of which the value of the "initial power supply state" is OFF to the power supply control section 24. The power supply control section 24 turns on the power supply of the hardware corresponding to the acquired identification information (ACT 204). On the other hand, in a case in which it is determined that there is no hardware of which the power supply is set to OFF in the initial state (NO in ACT 203), the used hardware has already become a power supply ON state. Thus, the power supply control section 24 doesn' t carry out a control to turn on the power supply of the used hardware.

The assignment section 23 assigns an image processing indicated by the instruction information to the determined hardware to execute it (ACT 205). The assignment section 23 determines whether or not the image processing is ended (ACT 206). In a case in which it is determined that the image processing has not been ended yet (NO in ACT 206), the assignment section 23 carries out the processing in ACT 205 repeatedly. In a case in which it is determined that the image processing is ended (YES in ACT 206), the assignment section 23 determines whether or not there is a piece of hardware of which the power supply is set to OFF in the initial state among the used hardware (ACT 207). The determination method is the same as that stated in ACT 203. In a case in which it is determined that there is a piece of hardware of which the power supply is set to OFF in the initial state (YES in ACT 207), the assignment section 23 outputs identification information of the piece of hardware of which the value of the "initial power supply state" is OFF to the power supply control section 24. The power supply control section 24 turns off the power supply of the hardware corresponding to the acquired identification information (ACT 208). In a case in which it is determined that there is no hardware of which the power supply is set to OFF in the initial state (NO in ACT 207), the power supply control section 24 doesn' t carry out a control to turn off the power supply of the used hardware.

In accordance with the present embodiment, the assignment section 23 can assign a processing for which the processing performance is required to a piece of hardware having a high processing performance to execute it. The assignment section 23 can assign a processing for which the processing performance is not required to a piece of hardware having a low processing performance to execute it. The power supply control section 24 can turn off the power supply of the unused hardware. Thus, the image processing apparatus 1 according to the present embodiment can put the hardware into practical use fully when compared with a case in which it is arranged in advance that only a part of the hardware is used

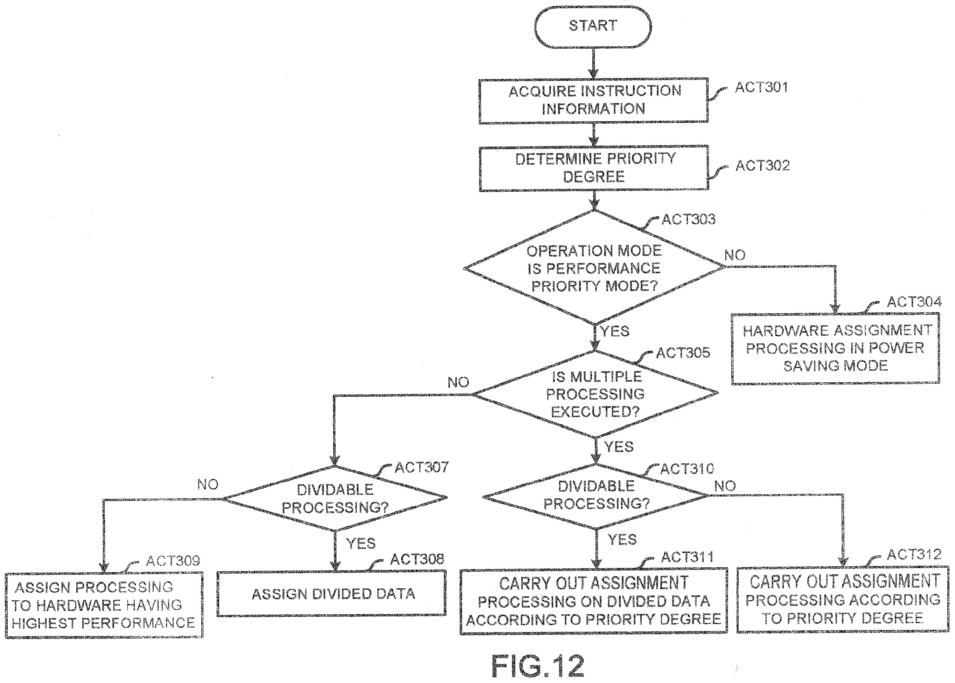

Fig. 12 is a flowchart illustrating a hardware assignment processing in the image processing apparatus 1.

A other method of the hardware assignment processing is described with reference to Fig. 12.

In this example, the information indicating the operation mode is added to the instruction information. The operation mode includes a performance priority mode and a power saving mode. The performance priority mode is an operation mode in which an image processing instructed by the user is executed in high speed as much as possible. The power saving mode is an operation mode for the purpose of suppressing the power consumption from the processing performance. It is assumed that the use condition corresponding to the power saving mode is defined in advance in the use conditions stored in the use condition information storage section 91. That is, if the user designates the power saving mode, the assignment section 23 assigns a processing to hardware to execute it as stated above.

First, the operation section 2 receives an input of instruction information required in the execution of an image processing to the image processing apparatus 1 (ACT 301). The instruction information contains the operation mode information, in addition to the processing category and the setting information. The operation section 2 outputs the instruction information to the system control section 20. In the system control section 20, the priority degree determination section 25 determines a priority degree according to which a processing corresponding to the instruction information is executed. For example, in a case in which more than one processing is executed, the priority degree determination section 25 may give a highest priority degree to a processing that is started at first. Alternatively, it is assumed that a processing based on an instruction information acquired through the external data input/output section 10 and a processing based on an instruction information acquired through the operation section 2 are being executed. In that case, the priority degree determination section 25 may give a higher priority degree to the processing based on the instruction information acquired through the operation section 2. The priority degree determination section 25 associates the determined priority degree with the processing, and then writes the associated information into the memory 8. The assignment section 23 determines whether or not the operation mode contained in the instruction information is the performance priority mode (ACT 303). In a case in which it is determined to be not the performance priority mode (NO in ACT 303), the assignment section 23 carries out a hardware assignment processing in the power saving mode (ACT 304). The hardware assignment processing in the power saving mode is as described so far. In a case in which it is determined to be the performance priority mode (YES in ACT 303), the assignment section 23 determines whether or not more than one processing has been executed (ACT 305). In a case in which it is determined that there is no more than one processing (NO in ACT 305), the assignment section 23 determines whether or not an image processing is a dividable processing (ACT 307). In a case in which it is determined to be a dividable processing (YES in ACT 307), the assignment section 23 divides the processing target data. The assignment section 23 assigns the processing on the divided data to different hardware (ACT 308). For example, the assignment section 23 assigns the processing on the image data that is divided into two parts to the ASIC 11 and the ASIC 12 respectively. Alternatively, the assignment section 23 may assign a processing on one of the divided image data to the SoC 7 to execute it. In a case in which it is determined to be not a dividable processing (NO in ACT 307), the assignment section 23 assigns the processing to a piece of hardware having the highest performance (ACT 309).

On the other hand, in a case in which it is determined there is more than one processing (YES in ACT 305), the assignment section 23 determines whether or not the processing is dividable processing (ACT 310). In a case in which it is determined to be dividable processing (YES in ACT 310), the assignment section 23 divides the processing target data and carries out an assignment processing according to the priority degrees (ACT 311). In a case in which it is determined to be not the dividable processing (NO in ACT 310), the assignment section 23 carries out an assignment processing according to the priority degrees (ACT 312).

The assignment processing according to the priority degrees is described. First, the assignment section 23 reads out a priority degree associated with each processing from the memory 8. For example, in a case of assigning a processing A having a highest priority degree, the assignment section 23 assigns the processing A to a piece of hardware having a highest performance (for example, the ASIC 12). In a case in which a processing B having a lowest priority degree is assigned to the hardware already having the highest performance, the assignment section 23 executes other processing directly in a delimited processing process. After the processing in the delimited processing process, the assignment section 23 assigns the aforementioned processing A having the highest priority degree to the hardware having the highest performance at a switchable timing. On the other hand, the assignment section 23 assigns the processing B having the lowest priority degree to a piece of hardware having a lower performance. For example, in a case in which more than one processing is started simultaneously, there is multiple pieces of hardware that are possible to execute these processing. The assignment section 23 assigns the processing A having the highest priority degree to the hardware having the highest performance. The assignment section 23 assigns the processing B having the lowest priority degree to the hardware having the lowest performance.

In accordance with the processing in Fig. 12, in a case in which the processing performance is required, it is possible to execute a processing faster by assigning the processing to multiple pieces of hardware. Further, even in a case in which a plurality of processing has been executed, it is possible to execute a processing having a high priority degree preferentially according to a priority degree of each processing. Further, in a case in which the system controller 13 consists of multiple pieces of hardware having different processing performances, each image processing can be assigned to a piece of hardware according to the priority degree. Thus, the processing having a high priority degree can be executed preferentially. In this way, the ability of the hardware in the system controller 13 can be put into practical use fully.

While certain embodiments have been described, these embodiments have been presented by way of example only, and are not intended to limit the scope of the invention. The object of the present invention is achieved with the features of the claims.

## Claims

1. An image processing apparatus (1) comprising a piece of hardware composed of a system-on-chip (7) enabling an ASIC (11) and an ASIC (12) to carry out an image processing, and a memory (8), the piece of hardware constituting a system control section (20) called as a system controller (13), the system control section (20) comprising:
a use condition generation section (21);
a constitution information acquisition section (22) configured to acquire constitution information of the device itself; and
an assignment section (23) configured to acquire a category of an image processing executed by the device itself, and assign the image processing to the piece of hardware, which is determined based on the category of the image processing, a hardware use condition definition table in which conditions for using a piece of hardware installed in a system controller (13) of the device itself are set, and the constitution information acquired by the constitution information acquisition section, to execute it; and
a power supply control section (24); **characterized in that**
the image processing apparatus (1) further comprises an auxiliary storage device (9) that comprises a use condition information storage device (91) that stores use condition information;
the use condition generation section (21) is configured to generate the hardware use condition definition table through the combination of the information of hardware with the use condition information, to read out the use condition information from the use condition information storage device (91) and to write the hardware use condition definition table in the memory (8); and
the power supply control section (24) is configured to carry out a control of power supply on the piece of hardware of which the ON / OFF of the power supply can be switched among the pieces of hardware installed in the system controller (13).

2. The image processing apparatus according to claim 1, further comprising:
a use condition generation section configured to acquire information of a piece of hardware installed in the system controller to generate a hardware use condition definition table in which a condition for using the acquired hardware is set.

3. The image processing apparatus according to claim 1 or 2, further comprising:
an operation section configured to receive an input of operation mode in an execution of the image processing, wherein
the assignment section determines the piece of hardware to which the image processing is assigned according to the operation mode received by the operation section.

4. The image processing apparatus according to any one of claims 1 to 3, further comprising:
a power supply control section configured to turn off a power supply of the piece of hardware of which power supply ON/OFF can be switched in a case in which the assignment section determines to assign the image processing, and to turn on the power supply of the piece of the hardware in the cases other than the case.

5. The image processing apparatus according to any one of claims 1 to 4, wherein
in a case in which there exists other piece of hardware that can execute an image processing in addition to the piece of hardware that is determined to execute the image processing and when the image processing can be divided, the assignment section divides image data relating to the image processing, and assigns each of the divided image data to the determined hardware and the other hardware to execute the image processing.

6. The image processing apparatus according to any one of claims 1 to 5, wherein
a dedicated circuit for image processing and a general processor are contained in the hardware, and
the assignment section assigns the image processing to the general processor.

7. The image processing apparatus according to any one of claims 1 to 6, wherein
the assignment section determines the piece of hardware assigned according to the priority degree of each image processing in a case of executing a plurality of image processing.

8. The image processing apparatus according to claim 7, wherein
in a case in which a first image processing is assigned to a first hardware having high performance, and a second image processing higher in priority degree than the first image processing is executed, the assignment section assigns the second image processing to the first hardware to execute it at a switchable timing.

9. The image processing apparatus according to any one of claims 5 to 8, wherein
the assignment section determines a processing load based on a given condition, and assigns each of the divided image data to the determined hardware and the other hardware to execute the image processing in a case in which it is determined to be a heavy load.

10. An image processing method, including:
acquiring constitution information of the device itself;
acquiring a category of an image processing executed by the device itself, and assigning the image processing to a piece of hardware, which is determined based on the category of the image processing, a hardware use condition definition table in which conditions for using a piece of hardware installed in a system controller of the device itself are set, and the acquired constitution information, to execute it; the method further comprising the steps of:
providing a piece of hardware composed of a system-on-chip (7) enabling an ASIC (11) and an ASIC (12) to carry out an image processing, and a memory (8), the piece of hardware constituting a system control section (20) called as a system controller (13);
providing a use condition generation section (21) comprised in the system control section (20); a power supply control section (24) comprised in the system control section (20); and an auxiliary storage device (9) which comprises a use condition information storage device (91) that stores use condition information; **characterized in that**
the use condition generation section (21) generates the hardware use condition definition table through the combination of the information of hardware with the use condition information, reads out the use condition information from the use condition information storage device (91) and writes the hardware use condition definition table in the memory (8); and
the power supply control section (24) carries out a control of power supply on the piece of hardware of which the ON / OFF of the power supply can be switched among the pieces of hardware installed in the system controller (13).

11. The method according to claim 10, further comprising:
acquiring information of the piece of hardware installed in the system controller to generate a hardware use condition definition table in which a condition for using the acquired hardware is set.

12. The method according to claim 10 or 11, further comprising:
receiving an input of operation mode in an execution of the image processing, in which the piece of hardware to which the image processing is assigned is determined according to the operation mode received at the receiving step.

13. The method according to any one of claims 10 to 12, further comprising:
turning off a power supply of the piece of hardware of which power supply ON/OFF can be switched in a case in which assigning the image processing is determined, and to turning on the power supply of the piece of the hardware in the cases other than the case.

14. The method according to any one of claims 10 to 13, wherein in a case in which there exists other piece of hardware that can execute an image processing in addition to the piece of hardware that is determined to execute the image processing and when the image processing can be divided, image data relating to the image processing is divided, and each of the divided image data is assigned to the determined hardware and the other hardware to execute the image processing.

15. The method according to any one of claims 10 to 14, further comprising determining the piece of hardware assigned according to the priority degree of each image processing in a case of executing a plurality of image processing.

## Patentansprüche

1. Bildverarbeitungsvorrichtung (1), umfassend eine Hardwarekomponente, die aus einem Systemchip (7), der eine ASIC (11) und eine ASIC (12) zum Ausführen von Bildverarbeitung aktiviert, und einem Speicher (8) besteht, wobei die Hardwarekomponente einen Systemsteuerabschnitt (20) bildet, der als eine Systemsteuerung (13) bezeichnet wird, wobei der Systemsteuerabschnitt (20) umfasst:
einen Nutzungsbedingungserzeugungsabschnitt (21);
einen Aufbauinformationserfassungsabschnitt (22), der zum Erfassen von Aufbauinformationen der Vorrichtung selbst konfiguriert ist;
einen Zuordnungsabschnitt (23), der so konfiguriert ist, dass er eine Kategorie einer Bildverarbeitung erfasst, die von der Vorrichtung selbst ausgeführt wird, und die Bildverarbeitung der Hardwarekomponente zuordnet, die basierend auf der Kategorie der Bildverarbeitung, einer Hardwarenutzungsbedingungsdefinitionstabelle, in welcher Bedingungen zur Nutzung einer in einer Systemsteuerung (13) der Vorrichtung selbst installierten Hardwarekomponente festgelegt sind, und den vom Aufbauinformationserfassungsabschnitt erfassten Aufbauinformationen bestimmt wird, um sie auszuführen; und
einen Leistungsversorgungssteuerabschnitt (24); **dadurch gekennzeichnet, dass**
die Bildverarbeitungsvorrichtung (1) ferner eine Hilfsspeichervorrichtung (9) umfasst, die eine Nutzungsbedingungsinformationsspeichervorrichtung (91) umfasst, welche Nutzungsbedingungsinformationen speichert;
der Nutzungsbedingungserzeugungsabschnitt (21) so konfiguriert ist, dass er die Hardwarenutzungsbedingungsdefinitionstabelle durch die Kombination der Informationen von Hardware mit den Nutzungsbedingungsinformationen erzeugt, die Nutzungsbedingungsinformationen aus der Nutzungsbedingungsinformationsspeichervorrichtung (91) ausliest und die Hardwarenutzungsbedingungsdefinitionstabelle in den Speicher (8) schreibt; und
der Leistungsversorgungssteuerabschnitt (24) so konfiguriert ist, dass er eine Steuerung von Leistungsversorgung an der Hardwarekomponente ausführt, deren EIN/AUS der Leistungsversorgung zwischen den in der Systemsteuerung (13) installierten Hardwarekomponenten gewechselt werden kann.

2. Bildverarbeitungsvorrichtung nach Anspruch 1, ferner umfassend:
einen Nutzungsbedingungserzeugungsabschnitt, der so konfiguriert ist, dass er Informationen einer in der Systemsteuerung installierten Hardwarekomponente erfasst, um eine Hardwarenutzungsbedingungsdefinitionstabelle zu erzeugen, in welcher eine Bedingung zur Nutzung der erfassten Hardware festgelegt ist.

3. Bildverarbeitungsvorrichtung nach Anspruch 1 oder 2, ferner umfassend:
einen Betriebsabschnitt, der zum Empfangen einer Eingabe eines Betriebsmodus bei einer Ausführung der Bildverarbeitung konfiguriert ist, wobei
der Zuordnungsabschnitt die Hardwarekomponente, der die Bildverarbeitung zugeordnet wird, gemäß dem vom Betriebsabschnitt empfangenen Betriebsmodus bestimmt.

4. Bildverarbeitungsvorrichtung nach einem der Ansprüche 1 bis 3, ferner umfassend:
einen Leistungsversorgungsabschnitt, der so konfiguriert ist, dass er eine Leistungsversorgung der Hardwarekomponente, deren Leistungsversorgungs-EIN/-AUS gewechselt werden kann, in einem Fall ausschaltet, in welchem der Zuordnungsabschnitt Zuordnung der Bildverarbeitung bestimmt, und die Leistungsversorgung der Hardwarekomponente in anderen Fällen als diesem Fall einschaltet.

5. Bildverarbeitungsvorrichtung nach einem der Ansprüche 1 bis 4, wobei
der Zuordnungsabschnitt in einem Fall, in welchem es zusätzlich zu der Hardwarekomponente, die zum Ausführen der Bildverarbeitung bestimmt wird, eine andere Hardwarekomponente gibt, die eine Bildverarbeitung ausführen kann, und wenn die Bildverarbeitung geteilt werden kann, Bilddaten in Bezug auf die Bildverarbeitung teilt und die geteilten Bilddaten jeweils der bestimmten Hardware und der anderen Hardware zum Ausführen der Bildverarbeitung zuordnet.

6. Bildverarbeitungsvorrichtung nach einem der Ansprüche 1 bis 5, wobei
eine dedizierte Schaltung zur Bildverarbeitung und ein allgemeiner Prozessor in der Hardware enthalten sind, und
der Zuordnungsabschnitt die Bildverarbeitung dem allgemeinen Prozessor zuordnet.

7. Bildverarbeitungsvorrichtung nach einem der Ansprüche 1 bis 6, wobei
der Zuordnungsabschnitt die Hardwarekomponente, die gemäß dem Prioritätsgrad jeder Bildverarbeitung zugeordnet wird, in einem Fall des Ausführens einer Mehrzahl von Bildverarbeitungen bestimmt.

8. Bildverarbeitungsvorrichtung nach Anspruch 7, wobei
der Zuordnungsabschnitt in einem Fall, in welchen eine erste Bildverarbeitung einer ersten Hardware mit hoher Performance zugeordnet ist, und eine zweite Bildverarbeitung ausgeführt wird, die einen höheren Prioritätsgrad als die erste Bildverarbeitung aufweist, die zweite Bildverarbeitung der ersten Hardware zuordnet, um sie bei einer wechselbaren Zeitvorgabe auszuführen.

9. Bildverarbeitungsvorrichtung nach einem der Ansprüche 5 bis 8, wobei
der Zuordnungsabschnitt eine Verarbeitungslast basierend auf einer gegebenen Bedingung bestimmt und in einem Fall, in welchem bestimmt wird, dass es sich eine schwere Last handelt, die geteilten Bilddaten jeweils der bestimmten Hardware und der anderen Hardware zum Ausführen der Bildverarbeitung zuordnet.

10. Informationsverarbeitungsverfahren, umfassend:
Erfassen von Aufbauinformationen der Vorrichtung selbst;
Erfassen einer Kategorie einer Bildverarbeitung, die von der Vorrichtung selbst ausgeführt wird, und Zuordnen der Bildverarbeitung zu der Hardwarekomponente, die basierend auf der Kategorie der Bildverarbeitung, einer Hardwarenutzungsbedingungsdefinitionstabelle, in welcher Bedingungen zur Nutzung einer in einer Systemsteuerung (13) der Vorrichtung selbst installierten Hardwarekomponente festgelegt sind, und den vom Aufbauinformationserfassungsabschnitt erfassten Aufbauinformationen bestimmt wird, um sie auszuführen; wobei das Verfahren ferner die folgenden Schritte umfasst:
Bereitstellen einer Hardwarekomponente, die aus einem Systemchip (7), der eine ASIC (11) und eine ASIC (12) zum Ausführen von Bildverarbeitung aktiviert, und einem Speicher (8) besteht, wobei die Hardwarekomponente einen Systemsteuerabschnitt (20) bildet, der als eine Systemsteuerung (13) bezeichnet wird;
Bereitstellen eines Nutzungsbedingungserzeugungsabschnitts (21), der im Systemsteuerabschnitt (20) umfasst ist; eines Leistungsversorgungssteuerabschnitts (24), der im Systemsteuerabschnitt (20) umfasst ist, und einer Hilfsspeichervorrichtung (9), die eine Nutzungsbedingungsinformationsspeichervorrichtung (91) umfasst, welche Nutzungsbedingungsinformationen speichert; **dadurch gekennzeichnet, dass**
der Nutzungsbedingungserzeugungsabschnitt (21) die Hardwarenutzungsbedingungsdefinitionstabelle durch die Kombination der Informationen von Hardware mit den Nutzungsbedingungsinformationen erzeugt, die Nutzungsbedingungsinformationen aus der Nutzungsbedingungsinformationsspeichervorrichtung (91) ausliest und die Hardwarenutzungsbedingungsdefinitionstabelle in den Speicher (8) schreibt; und
der Leistungsversorgungssteuerabschnitt (24) eine Steuerung von Leistungsversorgung an der Hardwarekomponente ausführt, deren EIN/AUS der Leistungsversorgung zwischen den in der Systemsteuerung (13) installierten Hardwarekomponenten gewechselt werden kann.

11. Verfahren nach Anspruch 10, ferner umfassend:
Erfassen von Informationen der in der Systemsteuerung installierten Hardwarekomponente, um eine Hardwarenutzungsbedingungsdefinitionstabelle zu erzeugen, in welcher eine Bedingung zur Nutzung der erfassten Hardware festgelegt ist.

12. Verfahren nach Anspruch 10 oder 11, ferner umfassend:
Empfangen einer Eingabe eines Betriebsmodus bei einer Ausführung der Bildverarbeitung, wobei die Hardwarekomponente, der die Bildverarbeitung zugeordnet wird, gemäß dem im Empfangsschritt empfangenen Betriebsmodus bestimmt wird.

13. Verfahren nach einem der Ansprüche 10 bis 12, ferner umfassend:
Ausschalten einer Leistungsversorgung der Hardwarekomponente, deren Leistungsversorgungs-EIN/-AUS gewechselt werden kann, in einem Fall, in welchem Zuordnung der Bildverarbeitung bestimmt wird, und Einschalten der Leistungsversorgung der Hardwarekomponente in anderen Fällen als diesem Fall.

14. Verfahren nach einem der Ansprüche 10 bis 13, wobei in einem Fall, in welchem es zusätzlich zu der Hardwarekomponente, die zum Ausführen der Bildverarbeitung bestimmt ist, eine andere Hardwarekomponente gibt, die eine Bildverarbeitung ausführen kann, und wenn die Bildverarbeitung geteilt werden kann, Bilddaten in Bezug auf die Bildverarbeitung geteilt werden und die geteilten Bilddaten jeweils der bestimmten Hardware und der anderen Hardware zum Ausführen der Bildverarbeitung zugeordnet wird.

15. Verfahren nach einem der Ansprüche 10 bis 14, ferner umfassend ein Bestimmen der Hardwarekomponente, die gemäß dem Prioritätsgrad jeder Bildverarbeitung zugeordnet wird, in einem Fall des Ausführens einer Mehrzahl von Bildverarbeitungen.

## Revendications

1. Appareil de traitement d'image (1) comprenant un composant matériel composé d'un système sur puce (7) permettant à un circuit intégré à application spécifique, ASIC, (11) et à un circuit intégré à application spécifique, ASIC, (12), de mettre en œuvre un traitement d'image, et une mémoire (8), le composant matériel constituant une section de commande de système (20) appelée « contrôleur de système » (13), la section de commande de système (20) comprenant :
une section de génération de conditions d'utilisation (21) ;
une section d'acquisition d'informations de constitution (22) configurée de manière à acquérir des informations de constitution du dispositif lui-même ; et
une section d'affectation (23) configurée de manière à acquérir une catégorie d'un traitement d'image exécuté par le dispositif lui-même, et à affecter le traitement d'image au composant matériel, qui est déterminé sur la base de la catégorie du traitement d'image, d'une table de définition de conditions d'utilisation de matériel dans laquelle sont définies des conditions d'utilisation d'un composant matériel installé dans un contrôleur de système (13) du dispositif lui-même, et des informations de constitution acquises par la section d'acquisition d'informations de constitution, en vue d'exécuter celui-ci ; et
une section de commande d'alimentation électrique (24) ;
**caractérisé en ce que** :
l'appareil de traitement d'image (1) comprend en outre un dispositif de stockage auxiliaire (9) qui comprend un dispositif de stockage d'informations de conditions d'utilisation (91) qui stocke des informations de conditions d'utilisation ;
la section de génération de conditions d'utilisation (21) est configurée de manière à générer la table de définition de conditions d'utilisation de matériel, à travers la combinaison des informations de matériel avec les informations de conditions d'utilisation, à lire les informations de conditions d'utilisation à partir du dispositif de stockage d'informations de conditions d'utilisation (91), et à écrire la table de définition de conditions d'utilisation de matériel dans la mémoire (8) ; et
la section de commande d'alimentation électrique (24) est configurée de manière à mettre en œuvre une commande d'alimentation électrique sur le composant matériel dont la mise sous/hors tension de l'alimentation électrique peut être commutée parmi les composants matériels installés dans le contrôleur de système (13).

2. Appareil de traitement d'image selon la revendication 1, comprenant en outre :
une section de génération de conditions d'utilisation configurée de manière à acquérir des informations d'un composant matériel installé dans le contrôleur de système en vue de générer une table de définition de conditions d'utilisation de matériel dans laquelle une condition d'utilisation du matériel acquis est définie.

3. Appareil de traitement d'image selon la revendication 1 ou 2, comprenant en outre :
une section de fonctionnement configurée de manière à recevoir une entrée de mode de fonctionnement dans le cadre d'une exécution du traitement d'image, dans laquelle :
la section d'affectation détermine le composant matériel auquel le traitement d'image est affecté, selon le mode de fonctionnement reçu par la section de fonctionnement.

4. Appareil de traitement d'image selon l'une quelconque des revendications 1 à 3, comprenant en outre :
une section de commande d'alimentation électrique configurée de manière à mettre hors tension une alimentation électrique du composant matériel dont la mise sous tension/hors tension d'alimentation électrique peut être commutée dans un cas où la section d'affectation détermine qu'il convient d'affecter le traitement d'image, et à mettre sous tension l'alimentation électrique du composant matériel dans les cas distincts dudit cas.

5. Appareil de traitement d'image selon l'une quelconque des revendications 1 à 4, dans lequel :
dans le cas où il existe un autre composant matériel en mesure d'exécuter un traitement d'image, outre le composant matériel qui est déterminé comme exécutant le traitement d'image, et lorsque le traitement d'image peut être divisé, la section d'affectation divise des données d'image connexes au traitement d'image, et affecte chacune des données d'image divisées au matériel déterminé et à l'autre matériel pour exécuter le traitement d'image.

6. Appareil de traitement d'image selon l'une quelconque des revendications 1 à 5, dans lequel :
un circuit spécialisé pour un traitement d'image et un processeur général sont contenus dans le matériel ; et
la section d'affectation affecte le traitement d'image au processeur général.

7. Appareil de traitement d'image selon l'une quelconque des revendications 1 à 6, dans lequel :
la section d'affectation détermine le composant matériel affecté selon le degré de priorité de chaque traitement d'image, dans le cas de l'exécution d'une pluralité de traitements d'image.

8. Appareil de traitement d'image selon la revendication 7, dans lequel :
dans le cas où un premier traitement d'image est affecté à un premier matériel de haute performance, et où un second traitement d'image, dont le degré de priorité est supérieur au premier traitement d'image, est exécuté, la section d'affectation affecte le second traitement d'image au premier matériel afin qu'il l'exécute au cours d'une temporisation commutable.

9. Appareil de traitement d'image selon l'une quelconque des revendications 5 à 8, dans lequel :
la section d'affectation détermine une charge de traitement sur la base d'une condition donnée, et affecte chacune des données d'image divisées, au matériel déterminé et à l'autre matériel, en vue d'exécuter le traitement d'image dans un cas où il est déterminé qu'il s'agit d'une charge lourde.

10. Procédé de traitement d'image, comprenant les étapes ci-dessous consistant à :
acquérir des informations de constitution du dispositif lui-même ;
acquérir une catégorie d'un traitement d'image exécuté par le dispositif lui-même, et affecter le traitement d'image à un composant matériel, qui est déterminé sur la base de la catégorie du traitement d'image, d'une table de définition de conditions d'utilisation de matériel dans laquelle sont définies des conditions d'utilisation d'un composant matériel installé dans un contrôleur de système du dispositif lui-même, et des informations de constitution acquises, en vue d'exécuter celui-ci ; le procédé comprenant en outre les étapes ci-dessous consistant à :
fournir un composant matériel composé d'un système sur puce (7) permettant à un circuit intégré à application spécifique, ASIC, (11) et à un circuit intégré à application spécifique, ASIC, (12), de mettre en œuvre un traitement d'image, et une mémoire (8), le composant matériel constituant une section de commande de système (20) appelée « contrôleur de système » (13) ;
fournir une section de génération de conditions d'utilisation (21) comprise dans la section de commande de système (20), une section de commande d'alimentation électrique (24) comprise dans la section de commande de système (20), et un dispositif de stockage auxiliaire (9) qui comprend un dispositif de stockage d'informations de conditions d'utilisation (91) qui stocke des informations de conditions d'utilisation ; **caractérisé en ce que** :
la section de génération de conditions d'utilisation (21) génère la table de définition de conditions d'utilisation de matériel, à travers une combinaison des informations de matériel avec les informations de conditions d'utilisation, lit les informations de conditions d'utilisation à partir du dispositif de stockage d'informations de conditions d'utilisation (91), et écrit la table de définition de conditions d'utilisation de matériel dans la mémoire (8) ; et
la section de commande d'alimentation électrique (24) met en œuvre une commande d'alimentation électrique sur le composant matériel dont la mise sous/hors tension de l'alimentation électrique peut être commutée parmi les composants matériels installés dans le contrôleur de système (13).

11. Procédé selon la revendication 10, comprenant en outre l'étape ci-dessous consistant à :
acquérir des informations du composant matériel installé dans le contrôleur de système en vue de générer une table de définition de conditions d'utilisation de matériel dans laquelle une condition d'utilisation du matériel acquis est définie.

12. Procédé selon la revendication 10 ou 11, comprenant en outre l'étape ci-dessous consistant à :
recevoir une entrée de mode de fonctionnement dans le cadre d'une exécution du traitement d'image, dans lequel le composant matériel auquel le traitement d'image est affecté est déterminé selon le mode de fonctionnement reçu à l'étape de réception.

13. Procédé selon l'une quelconque des revendications 10 à 12, comprenant en outre les étapes ci-dessous consistant à :
mettre hors tension une alimentation électrique du composant matériel dont la mise sous tension/hors tension d'alimentation électrique peut être commutée dans un cas dans lequel une affectation du traitement d'image est déterminée, et mettre sous tension l'alimentation électrique du composant matériel dans les cas distincts dudit cas.

14. Procédé selon l'une quelconque des revendications 10 à 13, dans lequel, dans un cas où il existe un autre composant matériel en mesure d'exécuter un traitement d'image, outre le composant matériel qui est déterminé comme exécutant le traitement d'image, et lorsque le traitement d'image peut être divisé, des données d'image connexes au traitement d'image sont divisées, et chacune des données d'image divisées est affectée au matériel déterminé et à l'autre matériel en vue d'exécuter le traitement d'image.

15. Procédé selon l'une quelconque des revendications 10 à 14, comprenant en outre l'étape ci-dessous consistant à :
déterminer le composant matériel affecté selon le degré de priorité de chaque traitement d'image dans le cas d'une exécution d'une pluralité de traitements d'image.
